# EUROPEAN PATENT SPECIFICATION

(11) **EP 3 610 687 B1**
(45) Date of publication and mention of the grant of the patent: **21.07.2021**
(21) Application number: 17719844.7
(22) Date of filing: 28.04.2017
(51) Int. Cl.: H04W 72/04, H04W 88/08

(54) **SOFT ACCESS POINT AND ACCESS POINT IN A WIRELESS NETWORK**
WEICHER ZUGANGSPUNKT UND ZUGANGSPUNKT IN EINEM DRAHTLOSEN NETZWERK
POINT D'ACCÈS LOGICIEL ET POINT D'ACCÈS DANS UN RÉSEAU SANS FIL

(43) Date of publication of application: 19.02.2020
(73) Proprietor: Huawei Technologies Co., Ltd., Longgang District Shenzhen, Guangdong 518129 (CN)
(72) Inventor: TSODIK, Genadiy, 80992 Munich (DE); SHILO, Shimon, 80992Munich (DE); EZRI, Doron, 80992 Munich (DE); WEITZMAN, Avi, 80992 Munich (DE); REDLICH, Oded, 80992 Munich (DE); FANG, Ping, 80992 Munich (DE)
(74) Representative: Pfenning, Meinig & Partner mbB
(86) International application number: PCT/EP2017/060154
(87) International publication number: WO 2018/196989

(56) References cited:
- US-A1- 2012 106 517
- US-A1- 2016 198 350

## Description

### TECHNICAL FIELD

The invention relates to a device for providing a soft Access Point (AP) in a wireless network. Further, the invention relates to an AP of a wireless network, and to a system including the device and the AP in the same wireless network. The invention also relates to a method for allocating resources in a wireless network, wherein the method is preferably carried out together by the device for providing the soft AP and the AP.

### BACKGROUND

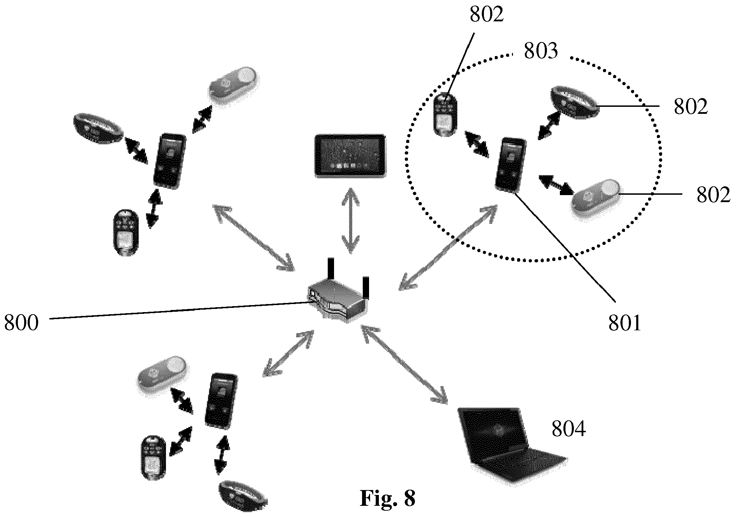

In future Wi-Fi networks there will be - as is illustrated in Fig. 8 - many stations 804 connected to a main AP 800. Some of these stations may function as a device 801 for providing a soft AP for local network units 802 connected to the devices 801 in a cluster 803. Thus, the network can be described as a variety of clusters 803. Each soft AP device 801 managing a cluster 803 is associated directly with the AP 800. The local devices 802 within each cluster 803 are usually not connected directly to the AP 800, so that their management is carried out by the soft AP 801. In such clustered networks, a smart management of internal cluster communications is required, in order to allow efficient behavior of also the main network.

Conventional clustered networks suffer from very low efficiency. Allocating different frequencies means that a frequency-band will be dedicated to each cluster. This frequency-band can then not be used by other clusters or by stations outside of clusters. Spatial reuse techniques have the trade-off between robustness and efficiency, wherein robustness is usually preferred. Thus, using spatial reuse techniques typically means low probability of allowing internal cluster communications. Accordingly, conventional solutions are not reliable for internal cluster communications, but also efficient in terms of the main network (outside of the clusters).

US 2016/198350 A1 describes a multi-band member access point (MMAP) capable of communicating with a multi-band control access point (MCAP) using a first frequency band, and capable of communicating with associated stations (STAs) using a second frequency band. US 2012/0106517 A1 proposes that a resource of a network is granted to a group designated for device-to-device communications. The group then determines how the resource allocation is utilized to support the communication session and allocates the resource among the user equipment within the group independently of the base station.

### SUMMARY

In view of the above-mentioned disadvantages, the invention aims at improving the conventional solutions for clustered networks. In particular, the object of the present invention is to provide a device for providing a soft AP and an AP, respectively, which are able to allocate resources in the network for efficient and reliable internal cluster communications, and also for transmissions in the main network. In particular, a smart management of resources for the internal cluster communications on the one hand side, and the main network transmissions (outside of a cluster) on the other hand side, is desired. Thereby, the resource management should be centralized in the AP.

The object of the present invention is achieved by the solutions provided in the enclosed independent claims. Advantageous implementations of the present invention are further defined in the dependent claims.

In particular, the main idea of the present invention is to allow an AP to allocate resources to a device providing a soft AP, which resources can be reused for internal communications in a cluster managed by the soft AP providing device.

A first aspect of the present invention provides a device for providing a soft AP in a wireless network, the device being configured to send, to an AP of the wireless network, a resource request message including cluster information about a cluster of network units connected to the device, receive, from the AP, a resource allocation message specifying first resources, and use the first resources for communications within the cluster.

Accordingly, the soft AP providing device receives from the AP a resource allocation message specifying the first resources, which the device can then reuse for internal cluster communications. Other stations (network units or devices, which includes other devices for providing a soft AP, and even other devices according to the first aspect), which are outside of the cluster and are connected to the AP, do not recognize that the specified first resources are specifically for use within the cluster. That is, for the main network, the resource allocation message sent by the AP to the soft AP device looks like a regular allocation of resources. In other words, the reuse of the resources for the internal cluster communications is transparent for network stations outside of the cluster, but still associated with the AP.

Since the device knows the resources which it can use for the internal cluster communications, it can also distinguish these first resources from other resources used, for example, for transmissions to the AP. Thus, the device can efficiently manage communications in the cluster on the one hand side, and other transmissions to the outside of the cluster on the other hand side.

The resource allocation message further specifies second resources, and the device is configured to use the second resources for uplink (UL) transmissions to the AP.

Accordingly, the device can use distinctively the second resources for transmissions with the AP, and the first resources for communications within the cluster. Nevertheless, it receives advantageously both the first resources and the second resources according to a regular resource allocation message, which is transparent to the main network. Accordingly, the device can efficiently obtain both kinds of resources for the different purposes from the AP.

In an implementation form of the first aspect, the cluster information comprises a cluster size, a desired Quality of Service (QoS) in the cluster, a frequency-band for communications in the cluster, and/or a communication parameter for communications within the cluster.

Including such parameters enables the device to manage internal cluster communications more efficiently and with, for instance, a desired throughput. The device may inform the AP about the nature of the required resources for the internal communications. It can thus receive first resources tailored to its requirements.

In a further implementation form of the first aspect, the first resources comprise one or more time-frequency slots.

Using such slots has the advantage that a regular frame structure can be preserved, and that the invention is compatible with legacy resource allocation schemes.

In a further implementation form of the first aspect, the resource allocation message further includes an ID of the device, a power constraint, and/or an interference parameter.

By using such parameters, the device can efficiently manage the internal cluster communications related to the connected network units.

A second aspect of the invention provides an AP of a wireless network, the AP being configured to receive, from a device for providing a soft AP of the wireless network, a resource request message including cluster information about a cluster of network units connected to the device, allocate, according to the cluster information, first resources for communications within the cluster, and send, to the device, a resource allocation message specifying the first resources.

Thus, the management of resources for internal cluster communications is centralized in the AP. This allows the AP to adjust the resources to the special requirements of each soft AP providing device connected to the AP. The AP, and also other network stations connected to the AP, do not need to be aware of the kind of technology that is used within the cluster of the device (e.g., which communication protocol is employed within the cluster), as long as the internal cluster communications do not interfere with network transmissions outside of the cluster, for instance, in other clusters or in the main network. Therefore, the AP is configured to provide a resource allocation scheme that is very flexible, and can be applied to different kinds of clusters.

The AP is further configured to allocate second resources for UL transmissions from the device to the AP, wherein the resource allocation message further specifies second resources.

The AP is thus aware of the resources which the device will use for transmissions to the AP, and also of the resources which will not be used for such transmissions to the AP, but rather for internal cluster communications.

In an implementation form of the second aspect, the AP is further configured to allocate the first resources and the second resources according to the cluster information, and according to information about network units connected to the AP and/or a network status.

In this way, the resources can be allocated most efficiently, and specifically tailored to the cluster, but can also be allocated in accordance with requirements of the main network.

In a further implementation form of the second aspect, the AP is further configured to send the resource allocation message by broadcasting it in the wireless network, preferably in a trigger frame.

Therefore, firstly, a regular frame structure can be preserved, and the management of the internal cluster communications can be centralized in the AP for all clusters. Secondly, each device for implementing a soft AP which has requested resources from the AP can obtain its first and/or second resources by selecting them (e.g., according to some kind of rule or indication) from the trigger frame, while disregarding all resources not specified for it.

In a further implementation form of the second aspect, the AP is further configured to determine one or more time-frequency slots as the first resources.

In a further implementation form of the second aspect, the cluster information comprises a communication parameter for communications within the cluster, and the AP is further configured to select a duration of the one or more time-frequency slots based on the communication parameter.

Thus, the AP can adjust the first resources to the communication parameter specified by the device. For example, if a payload size is high, a modulation is low, and a supported bandwidth is narrow. In such a case, a long duration is preferably allocated with a small amount of frequency tones. In this example, the communication parameter may comprise the payload size.

In a further implementation form of the second aspect, the cluster information comprises a desired QoS in the cluster, and the AP is further configured to select an amount of time-frequency slots within a defined time period based on the desired QoS in the cluster.

Accordingly, the AP is able to adjust the amount of the allocated resources over a longer time period to the QoS specified by the device. For instance, the AP may allocate resources less frequently for lower QoS and may allocate resources more frequently for a higher QoS. QoS may be defined by one or more parameters, such as bit rate, throughput, delay, availability, jitter or the like.

In a further implementation form of the second aspect, the AP is further configured to not detect UL transmissions from the device in the allocated first resources.

The AP can neglect the detection, because it knows that the first resources are used for internal cluster communications, not for transmissions of the device with the AP. Thus, the AP can detect UL transmissions from the device only in the allocated second resources, and can thus more efficiently communicate with the device on the one hand side, and can lower its resource consumption on the other hand side.

A third aspect of the invention provides a system comprising a device according to the first aspect or one of its implementation forms, and AP according to the second aspect or one of its implementation forms.

A fourth aspect of the invention provides a method for allocating resources in a wireless network, the wireless network comprising an AP and a device for providing a soft AP in the wireless network, the message comprising the steps of sending, by the device, a resource request message to the AP, the resource request message including cluster information about a cluster of network units connected to the device, allocating, by the AP according to the cluster information, first resources for communications within the cluster, sending, to the device, a resource allocation message specifying the first resources, and using, by the device, the first resources for communications within the cluster. The resource allocation message further specifies second resources. The method further comprises using, by the device, the second resources for uplink (UL) transmissions to the AP.

The method of the first aspect can be extended by implementation forms which correspond to the implementation forms of the first aspect and the second aspect, respectively. That is, further method steps can be added according to the actions carried out in these implementation forms by the device and the AP, respectively.

Accordingly, the method achieves the same advantages and effects as the device of the first aspect and its implementation forms, and the device of the second aspect and its implementation forms, respectively.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above-described aspects and implementation forms of the invention will be explained in the following description of specific embodiments in relation to the enclosed drawings, in which
- Fig. 1: shows a device for implementing a soft AP according to an embodiment of the invention.
- Fig. 2: shows an AP according to an embodiment of the invention.
- Fig. 3: shows an example for resources allocated for cluster communications parallel to resources for the main network.
- Fig. 4: shows communications within the cluster parallel to transmissions within the main network.
- Fig. 5: shows an adjustment of resources to a communication parameter.
- Fig. 6: shows an adjustment of resources to QoS.

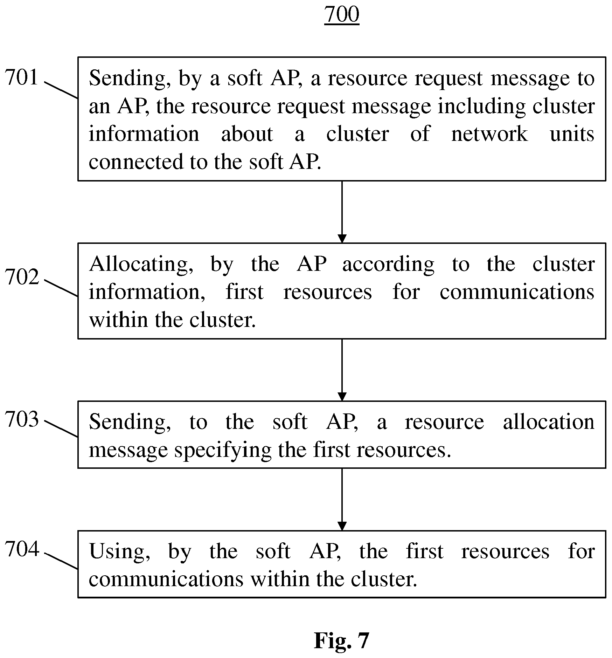

- Fig. 7: shows a method according to an embodiment of the invention.
- Fig. 8: shows a conventional clustered network.

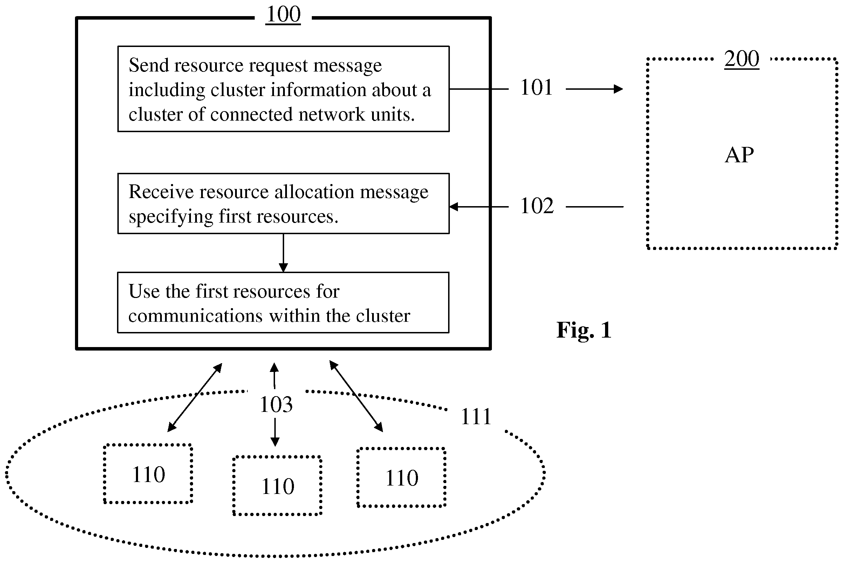

The device 100 according to an embodiment of the invention, which is shown in Fig. 1, is configured to provide a soft AP in a wireless network. That is, the device 100 can implement the soft AP, and can thus serve and manage a cluster 111 of network units 110. These network units 110 are at least connected directly to the device 100, but not necessarily also to an AP 200 of the wireless network.

The device 100 is further configured to send to the AP 200 of the wireless network a resource request message 101. The resource request message 101 includes at least cluster information about the cluster 111 of network units 110 connected to the device 100.

The device 100 is also configured to receive, from the AP 200, a resource allocation message 102 in response to the resource request message 101. The resource allocation message 102 specifies at least first resources.

The device 100 is configured to use these first resources received by the resource allocation message 102 for communications 103 within the cluster 111, for example, for communications 103 with or between the network units 110.

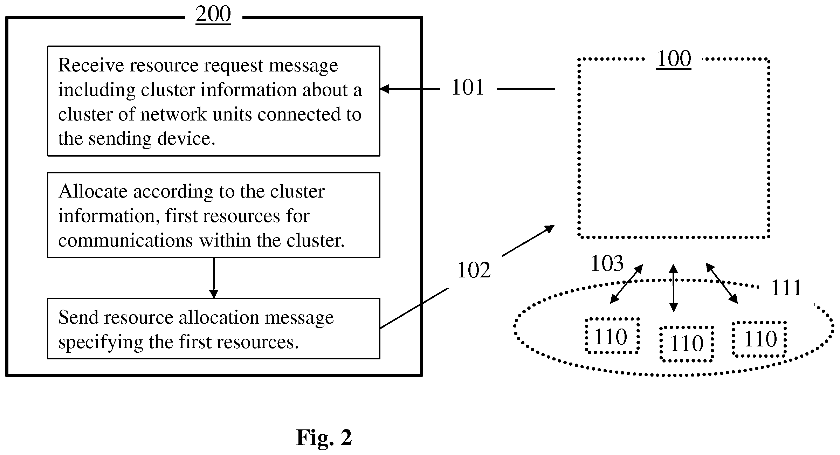

Fig. 2 shows accordingly an AP 200 according to another embodiment of the invention in a wireless network. The AP 200 is particularly configured to interact with a device 100 as shown in Fig. 1. To this end, the AP 200 is configured to receive from the device 100 a resource request message 101 including cluster information about a cluster 111 of network units 110 connected to the device 100.

The AP 200 is then further configured to allocate, according to the received cluster information, first resources for communications 103 within the cluster 111 of the device 100.

The AP 200 is configured to send a resource allocation message 102 to the device 100 specifying the allocated first resources.

The invention also includes a system including at least one device 100 as shown in Fig. 1, and at least one AP 200 as shown in Fig. 2. The device 100, the AP 200 and the system, respectively, can be employed for implementing a more efficient and smarter allocation and management of resources within a wireless network, particularly resources both for internal cluster communications 103 and other transmissions or communications in the main network (i.e. outside this specific cluster 111).

As an example for other transmissions in the network, the resource allocation message 102 sent from the AP 200 to the device 100 may specify second resources, wherein the device 100 is configured to use the second resources for UL transmissions to the AP 200. Thus, different kinds of resources are allocated and sent by the AP 200 to the device 100, namely on the one hand side the first resources for internal cluster communications 103, and on the other hand side the second resources for conventional transmissions with the AP 200.

Each of the soft AP providing devices 100 in the wireless network can inform the AP 200 about its required resources for internal cluster communications 103, including e.g., time, frequency-band, and transmission parameters (such as, e.g., payload size, MCS, power, data type, etc.). The AP 200 can accordingly allocate and distribute different first resources to these devices 100 for each cluster 111 according to those requirements and/or according to a status of the main network. For the main network, this resource distribution appears like a conventional allocation and distribution of resources. That is, the reuse of the first resources by a device 100 for internal communications 103 in a cluster 111, is transparent for other stations associated with the AP 200. Only the specific device 100 knows what the first resources are for. For instance, the AP 200 can inform - within a trigger frame - that a certain device 100 has a resource allocation in a next UL frame, while, however, this device 100 will use this resource allocation for internal communications 103 in its cluster 111, and not for UL.

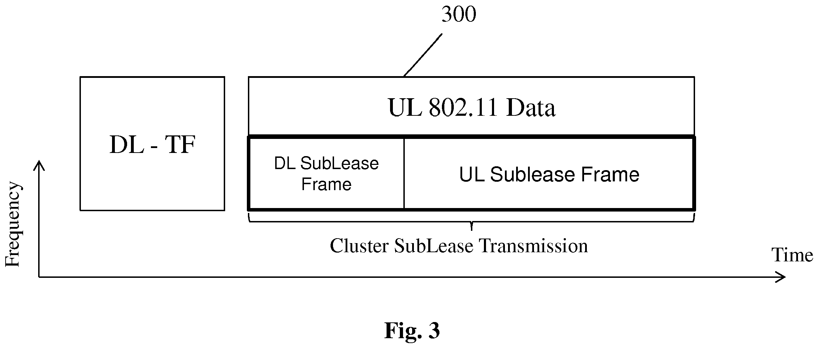

A specific resource allocation is shown in Fig. 3. Preferably, the resources are allocated by the AP 200 as time-frequency slots 300. In Fig. 3, Downlink (DL) means from the AP 200 to an associated network unit or device (network station) including the device 100. UL means from an allocated station to the AP 200. TF means 'trigger frame'. Here, resources for internal cluster communications 103 (labelled 'Cluster SubLease Transmission') are allocated in specifically an UL time-frequency slot. In this way, reuse of the resources for communications 103 within the cluster 111 is enabled, while furthermore a regular frame structure is preserved, all resource management is done by the AP 200, i.e. a centralized management approach is implemented, and the same frequency band may be reused for the communications 103 within the clusters 11.

The allocation of resources may particularly be carried out according to the following rules and principles. The allocation of the resources, preferably of the time-frequency slots 300, is always defined by the AP 200. Further, the allocated first resources are available for the device 100 and its cluster members 110 only. Further, each device 100 manages the network units 110 within its own cluster 111, while it otherwise adheres to the AP 200 scheduling (e.g., wake-up of the device, only when transmission is allowed, adjustment of transmit times, power, etc.). Further, a minimal allocated bandwidth and time may be considered to reduce scheduling complexity. Finally, it should be ensured that the signals transmitted within a cluster 111 cannot interfere with other signals, for instance, with transmissions in the main network or with communications in another cluster 111 (which is similar to spatial reuse principles).

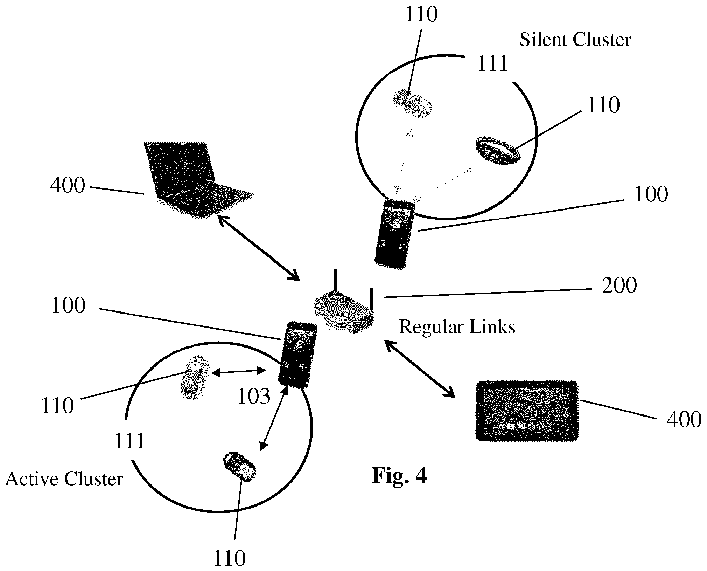

Fig. 4 shows schematically the communications 103 within clusters 111 of network units 110 (an active cluster 111 and a silent cluster 111 of two devices 100 are shown), parallel with transmissions in the main network. The AP 200 preferably connects directly with the devices 100 for providing the soft AP, and with regular network stations 400. The network units 110 connected to the soft AP devices 100 are in this case not directly corrected to the AP 200, but are managed in the clusters 111 by the devices 100. In order to distribute the first resources for the respective clusters 111 to the individual devices 100, the following information exchange is preferred.

The device 100 provides the AP 200 with the resource request message 101, which preferably contains the following information. An indication that it is a device 100 that provides a soft AP, a cluster size (e.g., an amount of network units 110 in the cluster 111), a desired QoS (e.g., delay, error rate, bit rate, availability and/or jitter) within the cluster 111, and one or more main communications parameters within the cluster 111. A main communication parameter may comprise a payload size, MCS, power, a data type, etc.

The resource request massage 101 with such information enables the AP 200 to allocate first resources to a device 100, such that the device 100 can manage its internal cluster communications 103 efficiently, and can achieve a desired throughput.

The AP 200 responds to the device 100 with a resource allocation message 102, which preferably includes at least the following information. An ID of the device 100 that provides the soft AP, such that the device 100 can determine (e.g., from a trigger frame) that the allocated first resources are intended for its use. The device 100 may disregard resources allocated in correspondence with another ID. Thereby, the allocation of resources for internal cluster communications 103 of a certain device 100 is transparent for all other devices 100 and also for other stations 400. A time-frequency slot definition, such that the device 100 is enabled to easily obtain the first resources. One or more power constraints and/or interference parameters (for instance, how much interference is allowed in the current communication). All selected information is preferably broadcast by the AP 200 to all stations 400 and devices 100 connected to it, more preferably is distributed in a trigger frame as shown in Fig. 3.

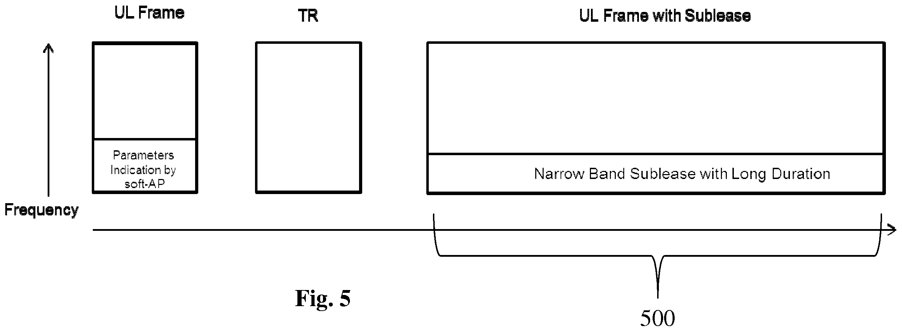

Fig. 5 shows how the AP 200 can adjust the allocation of the first resources for a device 100 to one or more communication parameters. In particular, the AP 200 can adjust a size of a time-frequency slot 300 to the communication parameter, which may previously be specified by the device 100 in the resource request message 101. For instance, a payload size may be specified by the device 100 as communication parameter. This may be done in an UL frame, i.e. the resource request message 101 is an UL transmission to the AP 200. If the payload size is specified to be high, a modulation is low, and a supported bandwidth is narrow. Accordingly, a longer duration 500 needs to be allocated for the first resources (i.e. a time-frequency slot with a longer time dimension needs to be used), while a frequency tone may be smaller. In Fig. 5 this is indicated by 'Narrow Band Sublease with Long Duration', the duration 500 of which is long.

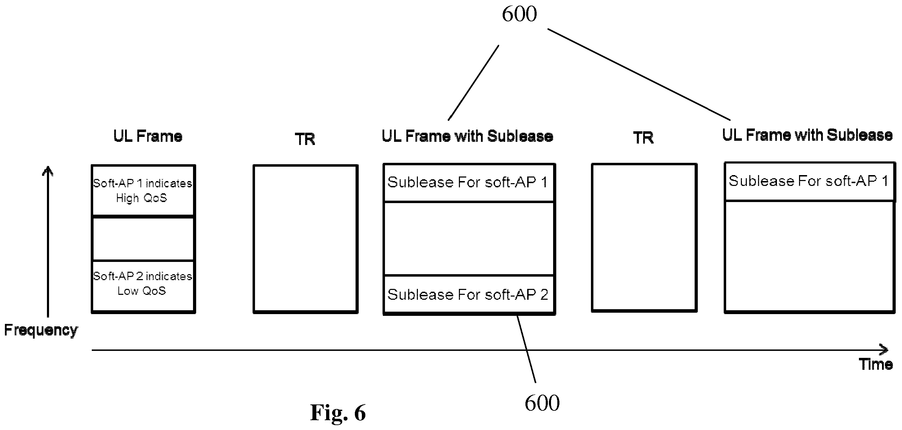

Fig. 6 shows another possible adjustment of the allocation of the first resources by the AP 200, namely to one or more QoS requirements (e.g., bit rate, error rate, delay, availability, jitter etc.). The AP 200 can adjust particularly the amount of the allocated first resources over a longer time period to the QoS requirements, which may be specified by the device 100 in its resource request message 101. For instance, the AP 200 could allocate less frequently the first resources (i.e. could allocate a lower amount 600 of first resources within a defined time period) for a lower required QoS, or could allocate more frequently the first resources (i.e. could allocate a higher amount 600 of first resources in the same defined time period) for a higher required QoS. In Fig. 6 this is indicated by 'Sublease For soft-AP 1', which is allocated with an amount 600 of two (twice) within a defined time period, and by 'Sublease For soft-AP 1', which is allocated with an amount 600 of one (once). This is the result of a first device 100 (soft-AP 1) indicating 'High QoS' during the UL frame, and a second device 100 (soft-AP 2) indicating 'Low QoS' during the UL frame.

The invention resolves the conventional trade-off between efficiency and robustness of resource allocation. Also, coexistence with the main network is well enabled, since the AP 200 manages all resources, and indicates what the guidelines for the internal cluster transmissions 103 are. Each device 100 can adjust its communication parameters accordingly, for example, a transmission power, guard band, time alignment, etc. The AP 200 can prioritize its resource allocation management, i.e. it can adjust the allocations for different clusters 111 to the requirements of each cluster 111, and also to the main network conditions and to general constraints. Finally, internal communications 103 within a cluster 111 should include a legacy part, in order to ensure that the link is protected from external interference.

The invention allows an efficient coexistence of soft AP managed clusters 111 and a wireless main network, with no need of specifying additional resources. Furthermore, the idea of a centralized management by the AP 200 leads to a network scheduling that is efficient and robust. The invention can be combined with other techniques, which solve similar issues, or with other network technologies.

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A device (100) for providing a soft Access Point, AP, in a wireless network, the device (100) being configured to
send, to an AP (200) of the wireless network, a resource request message (101) including cluster information about a cluster (111) of network units (110) connected to the device (100),
receive, from the AP (200), a resource allocation message (102) specifying first resources, and
use the first resources for communications (103) within the cluster (111), **characterized in that**
the resource allocation message (102) further specifies second resources allocated by the AP for uplink, UL, transmissions from the device to the AP, and
the device (100) is configured to use the second resources for UL transmissions to the AP (200).

2. The device (100) according to claim 1, wherein
the cluster information comprises a cluster size, a desired Quality of Service, QoS, in the cluster (111), a frequency-band for communications (103) in the cluster (111), and/or a communication parameter for communications (103) within the cluster (111).

3. The device (100) according to one of the claims 1 or 2, wherein
the first resources comprise one or more time-frequency slots (300).

4. The device (100) according to one of the claims 1 to 3, wherein
the resource allocation message (102) further includes an, identifier, ID of the device (100), a power constraint, and/or an interference parameter.

5. An access point, AP, (200) of a wireless network, the AP (200) being configured to
receive, from a device (100) for providing a soft AP of the wireless network, a resource request message (101) including cluster information about a cluster (111) of network units (110) connected to the device (100),
allocate, according to the cluster information, first resources for communications (103) within the cluster (111), and
send, to the device (100), a resource allocation message (102) specifying the first resources,
**characterized in that** the AP is further configured to
allocate second resources for uplink, UL, transmissions from the device (100) to the AP (200),
wherein the resource allocation message (102) further specifies second resources.

6. The AP (200) according to claim 5, further configured to
allocate the first resources and the second resources according to the cluster information, and according to information about network units (400) connected to the AP (200) and/or a network status.

7. The AP (200) according to one of the claims 5 or 6, further configured to
send the resource allocation message (102) by broadcasting it in the wireless network in a trigger frame.

8. The AP (200) according to one of the claims 5 to 7, further configured to determine one or more time-frequency slots (300) as the first resources.

9. The AP (200) according to claim 8, wherein
the cluster information comprises a communication parameter for communications (103) within the cluster (111), and
the AP (200) is further configured to select a duration (500) of the one or more time-frequency slots (300) based on the communication parameter.

10. The AP (200) according to claim 8 or 9, wherein
the cluster information comprises a desired Quality of Service, QoS, in the cluster (111), and
the AP (200) is further configured to select an amount (600) of time-frequency slots (300) within a defined time period based on the desired QoS in the cluster (111).

11. The AP (200) according to one of the claims 5 to 10, further configured to not detect UL transmissions from the device (100) in the allocated first resources.

12. A system comprising a device (100) according to one of the claims 1 to 4 and an AP (200) according to one of the claims 5 to 11.

13. A method (700) for allocating resources in a wireless network, the wireless network comprising an Access Point, AP, (200) and a device (100) for providing a soft AP in the wireless network, the method (700) comprising the steps of
sending (702), by the device (100), a resource request message (101) to the AP (200), the resource request message (101) including cluster information about a cluster (111) of network units (110) connected to the device (100),
allocating (702), by the AP (200) according to the cluster information, first resources for communications (103) within the cluster (111),
sending (703), to the device (100), a resource allocation message (102) specifying the first resources, and
using (704), by the device (100), the first resources for communications (103) within the cluster (111),
**characterized in that** the resource allocation message (102) further specifies second resources allocated by the AP for uplink, UL, transmissions from the device to the AP, and the method further comprises
using, by the device (100), the second resources for UL transmissions to the AP (200).

## Patentansprüche

1. Vorrichtung (100) zum Bereitstellen eines weichen Zugangspunktes (AP) in einem drahtlosen Netzwerk, wobei die Vorrichtung (100) dazu konfiguriert ist,
an einen AP (200) des drahtlosen Netzwerkes eine Ressourcenanforderungsnachricht (101) zu senden, die Clusterinformationen über einen Cluster (111) von Netzwerkeinheiten (110) beinhaltet, welche mit der Vorrichtung (100) verbunden sind,
von dem AP (200) eine Ressourcenzuweisungsnachricht (102) zu empfangen, die erste Ressourcen spezifiziert, und
die ersten Ressourcen für Kommunikationen (103) innerhalb des Clusters (111) zu verwenden,
**dadurch gekennzeichnet, dass**
die Ressourcenzuweisungsnachricht (102) ferner zweite Ressourcen spezifiziert, die durch den AP für Uplink-Übertagungen (UL-Übertragungen) von der Vorrichtung zu dem AP zugewiesen werden, und
die Vorrichtung (100) dazu konfiguriert ist, die zweiten Ressourcen für UL-Übertragungen an den AP (200) zu verwenden.

2. Vorrichtung (100) nach Anspruch 1, wobei die Clusterinformationen eine Clustergröße, eine gewünschte Dienstgüte (QoS) in dem Cluster (111), ein Frequenzband für Kommunikationen (103) in dem Cluster (111) und/oder einen Kommunikationsparameter für Kommunikationen (103) innerhalb des Clusters (111) umfassen.

3. Vorrichtung (100) nach einem der Ansprüche 1 oder 2, wobei die ersten Ressourcen einen oder mehrere Zeit-Frequenz-Schlitze (300) umfassen.

4. Vorrichtung (100) nach einem der Ansprüche 1 bis 3, wobei die Ressourcenzuweisungsnachricht (102) ferner eine Kennung (ID) der Vorrichtung (100), eine Leistungsbeschränkung und/oder einen Interferenzparameter beinhaltet.

5. Zugangspunkt (AP) (200) eines drahtlosen Netzwerkes, wobei der AP (200) dazu konfiguriert ist,
von einer Vorrichtung (100) zum Bereitstellen eines weichen AP des drahtlosen Netzwerkes eine Ressourcenanforderungsnachricht (101) zu empfangen, die Clusterinformationen über einen Cluster (111) von Netzwerkeinheiten (110) beinhaltet, welche mit der Vorrichtung (100) verbunden sind,
gemäß den Clusterinformationen erste Ressourcen für Kommunikationen (103) innerhalb des Clusters (111) zuzuweisen, und
an die Vorrichtung (100) eine Ressourcenzuweisungsnachricht (102) zu senden, welche die ersten Ressourcen spezifiziert,
**dadurch gekennzeichnet, dass** der AP ferner dazu konfiguriert ist,
zweite Ressourcen für Uplink-Übertragungen (UL-Übertragungen) von der Vorrichtung (100) an den AP (200) zuzuweisen,
wobei die Ressourcenzuweisungsnachricht (102) ferner zweite Ressourcen spezifiziert.

6. AP (200) nach Anspruch 5, der ferner dazu konfiguriert ist, die ersten Ressourcen und die zweiten Ressourcen gemäß den Clusterinformationen und gemäß Informationen über Netzwerkeinheiten (400), die mit dem AP (200) verbunden sind, und/oder einem Netzwerkstatus zuzuweisen.

7. AP (200) nach einem der Ansprüche 5 oder 6, der ferner dazu konfiguriert ist, die Ressourcenzuweisungsnachricht (102) zu senden, indem sie in dem drahtlosen Netzwerk in einem Auslöserahmen verbreitet wird.

8. AP (200) nach einem der Ansprüche 5 bis 7, der ferner dazu konfiguriert ist, einen oder mehrere Zeit-Frequenz-Schlitze (300) als die ersten Ressourcen zu bestimmen.

9. AP (200) nach Anspruch 8, wobei
die Clusterinformationen einen Kommunikationsparameter für Kommunikationen (103) innerhalb des Clusters (111) umfassen, und
der AP (200) ferner dazu konfiguriert ist, eine Dauer (500) des einen oder der mehreren Zeit-Frequenz-Schlitze (300) basierend auf dem Kommunikationsparameter auszuwählen.

10. AP (200) nach Anspruch 8 oder 9, wobei
die Clusterinformationen eine gewünschte Dienstgüte (QoS) in dem Cluster (111) umfassen, und
der AP (200) ferner dazu konfiguriert ist, eine Menge (600) an Zeit-Frequenz-Schlitzen (300) innerhalb eines definierten Zeitraums basierend auf der gewünschten QoS in dem Cluster (111) auszuwählen.

11. AP (200) nach einem der Ansprüche 5 bis 10, der ferner dazu konfiguriert ist, keine UL-Übertragungen von der Vorrichtung (100) in den zugewiesenen ersten Ressourcen zu detektieren.

12. System, umfassend eine Vorrichtung (100) nach einem der Ansprüche 1 bis 4 und einen AP (200) nach einem der Ansprüche 5 bis 11.

13. Verfahren (700) zum Zuweisen von Ressourcen in einem drahtlosen Netzwerk, wobei das drahtlose Netzwerk einen Zugangspunkt (AP) (200) und eine Vorrichtung (100) zum Bereitstellen eines weichen AP in dem drahtlosen Netzwerk umfasst, wobei das Verfahren (700) die folgenden Schritte umfasst:
Senden (702), durch die Vorrichtung (100), einer Ressourcenanforderungsnachricht (101) an den AP (200), wobei die Ressourcenanforderungsnachricht (101) Clusterinformationen über einen Cluster (111) von Netzwerkeinheiten (110) beinhaltet, welche mit der Vorrichtung (100) verbunden sind,
Zuweisen (702), durch den AP (200) gemäß den Clusterinformationen, von ersten Ressourcen für Kommunikationen (103) innerhalb des Clusters (111),
Senden (703) einer Ressourcenzuweisungsnachricht (102), welche die ersten Ressourcen spezifiziert, an die Vorrichtung (100), und
Verwenden (704), durch die Vorrichtung (100), der ersten Ressourcen für Kommunikationen (103) innerhalb des Clusters (111),
**dadurch gekennzeichnet, dass** die Ressourcenzuweisungsnachricht (102) ferner zweite Ressourcen spezifiziert, die durch den AP für Uplink-Übertragungen (UL-Übertragungen) von der Vorrichtung an den AP zugewiesen werden, und das Verfahren ferner Folgendes umfasst:
Verwenden, durch die Vorrichtung (100), der zweiten Ressourcen für UL-Übertragungen an den AP (200).

## Revendications

1. Dispositif (100) destiné à fournir un point d'accès logiciel, AP, dans un réseau sans fil, le dispositif (100) étant configuré pour
envoyer, à un AP (200) du réseau sans fil, un message de demande de ressources (101) incluant des informations de grappe concernant une grappe (111) d'unités de réseau (110) connectées au dispositif (100),
recevoir, de l'AP (200), un message d'attribution de ressources (102) spécifiant des premières ressources, et
utiliser les premières ressources pour des communications (103) à l'intérieur de la grappe (111),
**caractérisé en ce que**
le message d'attribution de ressources (102) spécifie en outre de secondes ressources attribuées par l'AP pour des transmissions en liaison montante, UL, du dispositif à l'AP, et
le dispositif (100) est configuré pour utiliser les secondes ressources pour des transmissions UL à l'AP (200).

2. Dispositif (100) selon la revendication 1, dans lequel les informations de grappe comprennent une taille de grappe, une qualité de service, QoS, souhaitée dans la grappe (111), une bande de fréquences pour des communications (103) dans la grappe (111), et/ou un paramètre de communications pour des communications (103) à l'intérieur de la grappe (111).

3. Dispositif (100) selon l'une des revendications 1 ou 2, dans lequel les premières ressources comprennent un ou plusieurs intervalles temps-fréquence (300).

4. Dispositif (100) selon l'une des revendications 1 à 3, dans lequel le message d'attribution de ressources (102) inclut en outre un identifiant, ID, du dispositif (100), une contrainte de puissance et/ou un paramètre d'interférence.

5. Point d'accès, AP, (200) d'un réseau sans fil, l'AP (200) étant configuré pour
recevoir, d'un dispositif (100) destiné à fournir un AP logiciel du réseau sans fil, un message de demande de ressources (101) incluant des informations de grappe concernant une grappe (111) d'unités de réseau (110) connectées au dispositif (100),
attribuer, selon les informations de grappe, des premières ressources pour des communications (103) à l'intérieur de la grappe (111), et
envoyer, au dispositif (100), un message d'attribution de ressources (102) spécifiant les premières ressources,
**caractérisé en ce que** l'AP est en outre configuré pour
attribuer des secondes ressources pour des transmissions en liaison montante, UL, du dispositif (100) à l'AP (200),
dans lequel le message d'attribution de ressources (102) spécifie en outre des secondes ressources.

6. AP (200) selon la revendication 5, configuré en outre pour attribuer les premières ressources et les secondes ressources selon les informations de grappe, et selon les informations concernant les unités de réseau (400) connectées à l'AP (200) et/ou à un état de réseau.

7. AP (200) selon l'une des revendications 5 ou 6, configuré en outre pour envoyer le message d'attribution de ressources (102) en le diffusant dans le réseau sans fil dans une trame de déclenchement.

8. AP (200) selon l'une des revendications 5 à 7, configuré en outre pour déterminer un ou plusieurs intervalles temps-fréquence (300) en tant que premières ressources.

9. AP (200) selon la revendication 8, dans lequel
les informations de grappe comprennent un paramètre de communications pour des communications (103) à l'intérieur de la grappe (111), et
l'AP (200) est en outre configuré pour sélectionner une durée (500) des un ou de plusieurs intervalles temps-fréquence (300) sur la base du paramètre de communications.

10. AP (200) selon la revendication 8 ou 9, dans lequel
les informations de grappe comprennent une qualité de service, QoS, souhaitée dans la grappe (111), et
l'AP (200) est en outre configuré pour sélectionner une quantité (600) d'intervalles temps-fréquence (300) à l'intérieur d'une période de temps définie sur la base de la QoS souhaitée dans la grappe (111).

11. AP (200) selon l'une des revendications 5 à 10, configuré en outre pour ne pas détecter de transmissions UL à partir du dispositif (100) dans les premières ressources attribuées.

12. Système comprenant un dispositif (100) selon l'une des revendications 1 à 4 et un AP (200) selon l'une des revendications 5 à 11.

13. Procédé (700) destiné à attribuer des ressources dans un réseau sans fil, le réseau sans fil comprenant un point d'accès, AP, (200) et un dispositif (100) destiné à fournir un AP logiciel dans le réseau sans fil, le procédé (700) comprenant les étapes suivantes :
l'envoi (702), par le dispositif (100), d'un message de demande de ressources (101) à l'AP (200), le message de demande de ressources (101) incluant des informations de grappe concernant une grappe (111) des unités de réseau (110) connectées au dispositif (100),
l'attribution (702), par l'AP (200) en fonction des informations de grappe, de premières ressources pour des communications (103) à l'intérieur de la grappe (111),
l'envoi (703), au dispositif (100), d'un message d'attribution de ressources (102) spécifiant les premières ressources, et
l'utilisation (704), par le dispositif (100), des premières ressources pour des communications (103) à l'intérieur de la grappe (111),
**caractérisé en ce que** le message d'attribution de ressources (102) spécifie en outre des secondes ressources attribuées par l'AP pour des transmissions en liaison montante, UL, du dispositif à l'AP, et le procédé comprend en outre
l'utilisation, par le dispositif (100), des secondes ressources pour des transmissions UL à l'AP (200).
